(19) Europäisches Patentamt
European Patent Office
Office européen des brevets

(11) **EP 1 946 850 B1**

(12) **EUROPÄISCHE PATENTSCHRIFT**

(45) Veröffentlichungstag und Bekanntmachung des Hinweises auf die Patenterteilung:
**04.11.2020 Patentblatt 2020/45**

(51) Int Cl.:
*B05D 1/00* *(2006.01)*   *C09D 5/00* *(2006.01)*
*C09D 7/63* *(2018.01)*   *B01L 3/00* *(2006.01)*
*C08K 5/42* *(2006.01)*

(21) Anmeldenummer: **08100092.9**

(22) Anmeldetag: **04.01.2008**

(54) **Bahnförmiges Material mit einem ultradünnen Beschichtungslack zum Spreiten von Flüssigkeiten**

Tape-like material with ultra-thin cover varnish for spreading liquids

Matériau en forme de bande doté d'une laque de revêtement pour un étendre des liquides

(84) Benannte Vertragsstaaten:
**AT BE BG CH CY CZ DE DK EE ES FI FR GB GR HR HU IE IS IT LI LT LU LV MC MT NL NO PL PT RO SE SI SK TR**

(30) Priorität: **19.01.2007 DE 102007003755**

(43) Veröffentlichungstag der Anmeldung:
**23.07.2008 Patentblatt 2008/30**

(73) Patentinhaber: **tesa SE**
**22848 Norderstedt (DE)**

(72) Erfinder:
• **Neubert, Ingo**
**22850 Norderstedt (DE)**
• **Klose, Maren**
**21217 Seevetal (DE)**

(56) Entgegenhaltungen:
EP-A- 1 418 211    EP-A- 1 647 568
EP-A- 1 777 251    WO-A-93/14932
DE-A1- 19 829 165    US-A- 5 262 475

**Beschreibung**

Die vorliegende Erfindung betrifft ein bahnförmiges Material, das ein dauerhaftes schnelles Spreiten beziehungsweise einen dauerhaften sehr schnellen Transport von biologischen Flüssigkeiten wie beispielsweise Blut, Urin, Speichel oder Zellflüssigkeit ermöglicht.

In der modernen Medizindiagnostik werden eine immer größere Anzahl analytischer Teststreifen, so genannte Diagnoseteststreifen oder Biosensoren, verwendet. Mit diesen kann zum Beispiel der Gehalt an Glukose, Cholesterol, Proteinen, Ketonen, Phenylalanin oder Enzymen in biologischen Flüssigkeiten wie Blut, Speichel und Urin bestimmt werden.

Am häufigsten anzutreffen sind Diagnoseteststreifen zur Bestimmung und Überprüfung des Blutzuckergehaltes bei Diabetikern. Weltweit leiden etwa 175 Millionen Menschen an Diabetes mellitus Typ 1 und Typ 2. Die Tendenz dieser Erkrankung ist steigend.

Bei dieser nicht heilbaren Krankheit ist es notwendig, dass die Patienten bis zu fünfmal täglich ihren Blutzuckergehalt kontrollieren, um anhand dessen die Dosierung der Medikamentation (Insulin) sowie die Nahrungsmitteleinnahme optimal aufeinander abzustimmen. Im Falle eines zu hohen Blutzuckergehalts infolge einer Nichtkontrolle muss mit erheblichen gesundheitlichen Schäden gerechnet werden, die bis zum Tode führen können (diabetischer Schock aufgrund von Unter- aber auch von Überzuckerung). Bis vor wenigen Jahren waren die Diabetiker auf die Unterstützung von medizinischem Personal angewiesen, um den Blutzuckergehalt zu bestimmen. Um die Kontrolle des Blutzuckergehaltes so einfach wie möglich zu gestalten, wurde ein Test entwickelt, der es dem Kranken erlaubt, seinen Blutzuckergehalt, auch ohne auf medizinisches Personal angewiesen zu sein, mit geringsten Aufwand selbst zu bestimmen.

Zur Bestimmung des Blutzuckergehalts muss der Proband einen Bluttropfen auf einen Diagnoseteststreifen geben. Der Diagnoseteststreifen befindet sich dabei in einem Lesebeziehungsweise Auswertegerät. Nach einer Reaktions- oder Ansprechzeit wird auf dem Auswertegerät der aktuelle Blutzuckergehalt angezeigt. Entsprechende Lesebeziehungsweise Auswertegeräte sind zum Beispiel in der US 5,304,468 A, der EP 1 225 448 A1 und der WO 03/082091 A1 beschrieben.

Eines der ersten Patente auf dem Gebiet der Teststreifen ist bereits 1964 erschienen. In der GB 1,073,596 A werden ein Diagnosetest und die Teststreifen zur Analysierung biologischer Körperflüssigkeiten speziell zur Blutzuckerbestimmung beschrieben. Der Diagnosetest funktioniert über die Bestimmung einer Farbänderung, die durch eine Enzymreaktion ausgelöst wird.

Die Bestimmung einer Konzentrationsänderung eines Farbstoffes (Photometrische Methode) ist auch heute noch ein verwendetes Verfahren zur Blutzuckerbestimmung mittels Diagnoseteststreifen. Dabei reagiert das Enzym Glukose-Oxidase/Peroxidase mit dem Blutzucker. Das dabei entstehende Wasserstoffperoxid reagiert anschließend mit einem Indikator zum Beispiel O-Tolidine, was zu einer Farbreaktion führt. Diese Farbveränderung kann durch kolorimetrische Methoden verfolgt werden. Der Grad der Verfärbung ist direkt proportional zur Blutzuckerkonzentration. Das Enzym befindet sich hier auf einem Gewebe.

Dieses Verfahren wird zum Beispiel in der EP 0 451 981 A1 und in der WO 93/03673 A1 beschrieben.

Die moderne Entwicklung der Diagnoseteststreifen zielt auf eine Verkürzung der Messzeit zwischen der Blutaufgabe auf den Teststreifen und dem Erscheinen des Messwertes. Die Messzeit beziehungsweise die Zeit zwischen Aufgabe des Blutes auf den Biosensor bis zur Anzeige des Messwertes ist neben der eigentlichen Reaktionszeit der Enzymreaktion und der Folgereaktionen ebenfalls erheblich davon abhängig, wie schnell das Blut innerhalb des Biosensors von der Blutaufgabestelle zum Reaktionsort, das heißt zum Enzym, transportiert wird.

Zur Verkürzung der Messzeit werden unter anderem hydrophil ausgerüstete Vliese oder Gewebe wie in US 6,555,061 B verwendet, um das Blut schneller zum Reaktionsort (Enzym) zu transportieren. Das Messverfahren ist identisch mit dem in EP 0 451 981 A1 beschriebenen. Oberflächenmodifizierte Gewebe mit einem Dochteffekt für die biologische Flüssigkeit werden in WO 93/03673 A1 , WO 03/067252 A1 und US 2002/0102739 A1 beschrieben. In der US 2002/0102739 A1 wird durch eine Plasmabehandlung des Gewebes ein Bluttransport von 1,0 mm/s erreicht. Bei der Verwendung von Geweben für den Transport der biologischen Testflüssigkeit wie zum Beispiel Blut wird jedoch ein Chromatographieeffekt beobachtet, dass heißt, die Einzelbestandteile wie Zellen werden von den flüssigen Bestandteilen getrennt. Der Chromatographieeffekt wird explizit in WO 03/008933 A2 zur separaten Untersuchung der Blutbestandteile ausgenutzt.

Eine Weiterentwicklung zu der photometrischen Messmethode ist die elektrochemische Bestimmung. Dieses Verfahren und ein entsprechender Diagnoseteststreifen sind in WO 01/67099 A1 beschrieben. Der Aufbau des Diagnosestreifens erfolgt durch eine Bedruckung von verschiedenen Funktionsschichten wie elektrischen Leitern, Enzym und Schmelzklebstoff auf das Basismaterial aus zum Beispiel Polyester. Anschließend wird durch thermische Aktivierung des Klebers ein nicht näher beschriebener hydrophiler Film dazukaschiert. Der hydrophile Film dient auch hier zum Transport des Bluts zur Messzelle.

Bei diesem Aufbau ist kein Gewebe oder Vlies zum Bluttransport notwendig. Der Vorteil dieses Aufbaus sowie der neuen Messmethode ist, dass die Messung des Blutzuckergehaltes mit viel geringerem Blutvolumen von etwa 0,5 bis 3 μL

und in kürzerer Messzeit von 3 bis 5 sec durchgeführt werden kann.

Prinzipiell kann eine bessere Benetzbarkeit und somit eine Erhöhung der Transportgeschwindigkeit der biologischen Flüssigkeit innerhalb des Diagnosestreifens und damit eine Verkürzung der Messzeit durch Beschichtungen mit polaren Polymeren wie zum Beispiel Polyvinylpyrrolidon, Polycarpolactam, Polyethylenglykol oder Polyvinylalkohol erreicht werden. Die Benetzbarkeit beziehungsweise Hydrophilie dieser Beschichtungen sind jedoch für den schnellen Transport der biologischen Flüssigkeiten zu niedrig und damit für die gewünschte Anwendung nicht geeignet.
Eine weitere Möglichkeit besteht in der chemischen oder physikalischen Modifikation der Oberflächen. Standardmethoden hierfür sind die Corona- und die Flammbehandlung.

Diese Behandlungen sind aber über die Zeit nicht stabil. Die durch die Oberflächenbehandlung deutlich erhöhte Oberflächenenergie verringert sich bereits nach wenigen Tagen auf den ursprünglichen Wert.
Durch ein Ätzen der Oberfläche mit einer starken Säure wird ebenfalls eine Erhöhung der Hydrophilie erreicht. Zur Oberflächenätzung von technischen Folien werden zum Beispiel oxidierende Säuren wie Chromschwefelsäure oder Kaliumpermanganat in Verbindung mit Schwefelsäure verwendet. Polyesterfolien (PET) werden in der Technik üblicherweise durch chemische Behandlung mit zum Beispiel Trichloressigsäure oder Kaliumhydroxid an der Oberfläche hydrolysiert, wie es in der WO2005/111606 A1 offenbart ist. Bei diesen Methoden sind die Benetzbarkeit beziehungsweise die Oberflächenspannung auch nach Lagerung stabil. Allerdings sind die Benetzungseigenschaften über die Fläche inhomogen. Weitere Hinweise zur Oberflächenbehandlung von Folien sind in "Polymer Surface", F. Garbassi et al, John Wiley Verlag 1998 (ISBN 0471971006) Kapitel 6 (Seite 235) und Kapitel 7 (Seite 256) zu finden.

In der Literatur wird die Verwendung von Tensiden, dem Fachmann als grenzflächenaktive Substanzen bekannt, zur Verbesserung der Benetzbarkeit beschrieben. Tenside sind Moleküle oder Polymere, die aus einem unpolaren/hydrophoben Teil (Schwanz) und einer polaren/hydrophilen Gruppe (Kopf) bestehen. Zur Verbesserung der Benetzbarkeit von Oberflächen werden die Tenside der wässrigen Flüssigkeit zugegeben. Das Tensid bewirkt eine Herabsetzung der Oberflächenspannung der wässrigen Flüssigkeit an den Grenzflächen (flüssig-fest und flüssig-gasförmig). Dieser Effekt der Verbesserung der Benetzbarkeit der Oberflächen ist messbar in einer Verringerung des Kontaktwinkels. Der Fachmann unterscheidet zwischen anionischen, kationischen, amphoteren und nichtionischen Tensiden. Der hydrophobe Schwanz von Tenside kann aus linearen oder verzweigten Alkyl-, Alkylbenzyl-, perfluorierten Alkyl- oder Siloxane-Gruppen bestehen. Mögliche hydrophile Kopfgruppen sind anionische Salze von Carbonsäuren, Phosphorsäuren, Phosphonsäuren, Sulfaten, Sulfonsäuren, kationische Ammoniumsalze oder nichtionische Polyglycoside, Polyamine, Polyglycolester, Polyglycolether, Polyglycolamine, polyfunktionelle Alkohole oder Alkoholethoxylate. (Ullmann's Encyclopedia of Industrial Chemistry, Vol. A25, 1994, Seite 747).

In DE 102 34 564 A1 wird ein Biosensor beschrieben, der aus einem planaren Sensor oder Teststreifen und einem kompartimentierten Reaktions- und Messkammeraufsatz, der durch Prägung einer PVC-Folie hergestellt ist, besteht. Der Probenaufnahmekanal und die Messkammer werden für den Transport der biologischen Flüssigkeit mit einem hydrophilen Gewebe oder einem Tensid ausgerüstet. Ein sehr ähnlicher elektrochemischer Sensor wird in US 5,759,364 A1 beschrieben. Der Sensor besteht aus einer bedruckten Grundplatte und einer geprägten Deckfolie aus PET oder Polycarbonat. Der Messraum ist hier mit einem Polyurethan-Ionomer für einen beschleunigten Flüssigkeitstransport beschichtet.

In mehreren Veröffentlichungen wird die Verwendung von hydrophilen Materialien wie Gewebe (DE 30 21 166 A1), Membranen (DE 198 49 008 A1) und Folien (EP 1 358 896 A1, WO 01/67099 A1) erwähnt, ohne jedoch die hydrophilen Beschichtungen näher zu charakterisieren.

In der DE 198 15 684 A1 wird ein analytisches Hilfsmittel bestehend aus einer kapillaraktiven Zone, einem Klebebandstanzling und einer kapillaraktiven Abdeckfolie beschrieben. Die kapillaraktive Abdeckfolie besitzt hydrophile Oberflächeneigenschaften, die durch Bedampfung der Abdeckfolie mit Aluminium und anschließender Oxidation erreicht werden.

In der US 2005/0084681 A1 wird eine Oberfläche mit einer hydrophilen Beschichtung offenbart. Diese Beschichtung besteht aus einem Tensid, vorzugsweise einem nichtionischem Alkoholethoxylat, und einem Stabilisator, vorzugsweise einem Alkylbenzylsulfonat. Das Verhältnis von Tensid zu Stabilisator beträgt in der getrockneten Beschichtung ein bis drei Teile Tensid zu 0,25 bis 2,5 Teile Stabilisator. Der Stabilisator, der vorzugsweise ein anionisches Tensid ist, stellt eine Langzeitstabilität der hydrophilen Beschichtung sicher. Der stabilisierende Effekt wird durch eine Schmelztemperatur > 25 °C, bevorzugt > 45 °C des Stabilisators eingestellt, wodurch eine Verringerung des Dampfdruckes (Verringerung des Verdampfen der Tensidkombination) und somit eine Langzeitstabilität der hydrophilen Beschichtung erreicht wird.
In der Anwendung in einem Diagnosestreifen wird dennoch beobachtet, dass die Beschichtung bereits nach einer sehr kurzen Lagerzeit bei leicht erhöhten Temperaturen versagt und die biologische Testflüssigkeit nicht mehr in den Messkanal transportiert wird.

In EP 1 647 568 A1 wird eine so genannte Anti-Fog-Beschichtung beschrieben. Diese Beschichtung wird auf eine Polyesterfolie aufgebracht und dient der Vermeidung von Wassertröpfchenbildung bei Lebensmittelverpackungen. Bei der Anti-Fog-Beschichtung handelt es sich um eine hydrophile Beschichtung aus einem anionischen Tensid, einem Polyvinylpyrrolidon als Matrixpolymer und Wasser.

Heute sind bereits hydrophile Folien für die Anwendung in medizinischen Diagnosestreifen kommerziell erhältlich, zum Beispiel die Produkte 9962 und 9971 von 3M Inc., deren Verwendung in US 2002/0110486 A1 und EP 1 394 535 A1 gezeigt wird. Diese Produkte weisen eine Polyesterfolie auf, die entweder ein- oder beidseitig mit einer hydrophilen Beschichtung ausgerüstet ist. Diese Beschichtung besteht aus einer Polyvinylidenchlorid-Beschichtung, die ein Tensid auf Basis eines Alkylbenzylsulfonates enthält. Das Tensid muss zunächst an die Oberfläche der Beschichtung migrieren, bevor die hydrophilen Oberflächeneigenschaften entfaltet werden können. Eine detaillierte Untersuchung zeigt, dass diese Produkte für den Transport von biologischen Flüssigkeiten in Diagnosestreifen zwar geeignet sind, aber erhebliche Mängel bezüglich Homogenität, Transportgeschwindigkeit und Alterungsbeständigkeit aufweisen.

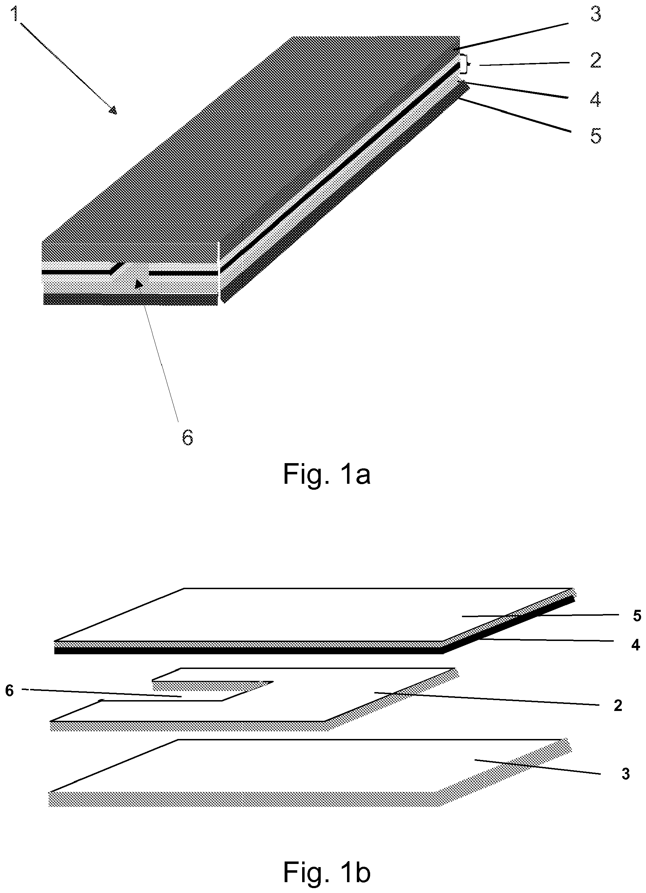

Als kommerzielle verfügbare hydrophile Folien sind zum anderen die Produkte ARflow® 90128 und ARflow® 90469 von Adhesives Research Inc. erhältlich, deren Verwendung in US 5,997,817 A1 gezeigt wird. Diese Produkte bestehen aus einer Polyesterfolie, die mit einem thermoplastischen Copolyester unter Zusatz eines Tensids beschichtet sind. Das Wirkprinzip ist analog der vorher beschriebenen Produkte von 3M Inc. Zur Vermeidung der Inhomogenitäten werden hier erheblich größere Mengen von ca. 5 bis 8 % des Tensids zugesetzt. Das hat jedoch zur Folge, dass die Oberfläche der hydrophilen Beschichtung eine wachsartige ist. Auf dieser Beschichtung eine ausreichende Verklebungsfestigkeit mit Haftklebebändern (siehe in Figur 1 die Schicht 2) nicht zu erreichen. Das führt im Herstellprozess der Teststreifen häufig zum Delaminieren des Verbundes.

Die Herstellung der beschriebenen Diagnoseteststreifen geschieht in den meisten Fällen durch eine diskontinuierliche Abfolge von Beschichtungs- und Laminierschritten. Als Basismaterial dienen Bögen aus einer 200 bis 500 μm dicken Folie aus Polyvinylchlorid, Polyester oder Polycarbonat mit den Abmaßen von etwa 400 x 400 mm. Den Beschichtungs- und Laminierschritten folgt gewöhnlich eine Reihe von Schneidvorgängen. Aufgrund der kleinen Abmaße der Diagnosestreifen von ca. 20 mm x 5 mm ist bei den Beschichtungs-, Laminier- und Schneidvorgängen höchste Präzision erforderlich. Das Schneiden zu den Diagnosestreifen geschieht üblicherweise mit sehr hohen Taktraten mit Schneidmaschinen von zum Beispiel Siebler GmbH oder Kinematik Inc. Bei den Schneidvorgängen können erheblich Probleme auftreten. Bei der Verwendung von ungeeigneten Materialien, die bei der Laminierung eine ungenügende Haftung zueinander aufweisen, wird häufig ein Delaminieren der Schichten im Schneidprozess beobachtet. Diese ungenügende Haftung kann auf eine ungeeignete Klebmasse, das heißt eine Klebmasse mit unzureichender Klebkraft, oder auf einen ungeeigneten Verklebungsuntergrund beziehungsweise auf eine ungeeignete Beschichtung des Verklebungsuntergrundes wie bei ARflow® 90128 und ARflow® 90469 von Adhesives Research Inc. zurückgeführt werden.

Aufgabe der vorliegenden Erfindung ist, ein bahnförmiges Material mit einem ultradünnen Beschichtungslack zur Verfügung zu stellen, das entsprechend den Anforderungen für den Einsatz in Diagnoseteststreifen und zum Aufbau derselben geeignet ist und das im Speziellen einen schnellen Transport der biologischen Flüssigkeit im Messkanal auch nach längerer Lagerung bei unterschiedlichen Bedingungen sowie eine gute Verbundfestigkeit zu Haftklebebändern mit scherfesten Klebmassen mit geringem Klebmassenauftrag gewährleistet. Hierbei ist weiterhin zu gewährleisten, dass die Eigenschaften und im Speziellen die Benetzungs- und Transporteigenschaften des bahnförmigen Materials auch nach einer langen Lagerzeit erhalten bleiben.

Gelöst wird diese Aufgabe durch ein bahnförmiges Material, wie es im Hauptanspruch niedergelegt ist. Gegenstand der Unteransprüche sind vorteilhafte Weiterentwicklungen des Erfindungsgegenstandes. Des Weiteren umfasst die Erfindung die Verwendungsmöglichkeit der erfindungsgemäßen Folie unter anderem in medizinischen Diagnosestreifen zur Untersuchung von biologischen Flüssigkeiten.

Demgemäß betrifft die Erfindung ein bahnförmiges Material, bestehend aus einem Trägermaterial, das ein- oder beidseitig einen ultradünnen Beschichtungslack aufweist, der aus einem anionischen Tensid auf Basis eines Sulfobernsteinsäureester-Salzes besteht. Der Beschichtungsauftrag des Beschichtungslacks nach dessen Trocknung beträgt 5 bis 100 mg/m$^2$, vorzugsweise 10 bis 50 mg/m$^2$ und besonders bevorzugt 15 bis 30 mg/m$^2$.

Das Sulfobernsteinsäureester-Salz weist die folgende chemische Struktur auf:

$$R'OOC\text{-}CH_2\text{-}CH(SO_3^-)\text{-}COOR'' \qquad M^+$$

mit

M$^+$ = zum Beispiel Na$^+$ oder K$^+$
R', R'' = Alkyl-Kette zum Beispiel Butyl-, Hexyl-, 2-Ethylhexyl-

Für den erfindungsgemäßen ultradünnen Beschichtungslack wird vorzugsweise Natriumsulfobernsteinsäure-bis-2-ethylhexylester (CAS-Nummer 577-11-7) wie zum Beispiel Lutensit® A-BO von BASF AG oder Rewopol® SB DO 75 von Goldschmidt GmbH verwendet. Besonders bevorzugt besteht der Beschichtungslack ausschließlich aus Natriumsulfobernsteinsäure-bis-2-ethylhexylester ohne weitere Zusatzstoffe.

Der ultradünne Beschichtungslack des erfindungsgemäßen Materials ermöglicht einen dauerhaften schnellen Transport von zum Beispiel biologischen Flüssigkeiten, so dass das Material für medizinische Anwendungen wie Diagnosestreifen, mittels derer biologische Flüssigkeiten untersucht werden, geeignet ist.

Die charakteristische Eigenschaft des erfindungsgemäßen bahnförmigen Materials ist die dauerhafte sehr gute Benetzbarkeit für biologische Flüssigkeiten wie Blut, Urin, Speichel und Zellflüssigkeit, die zu einem sehr weiten und schnellen Ausspreiten und somit zu einem Transport der Flüssigkeiten führt.

Diese Eigenschaft spiegelt sich wider in:

- einer Oberflächenspannung von mindestens 65 mN/m, vorzugsweise von mindestens 70 mN/m,
- einem Kontaktwinkel mit Wasser kleiner als 30°,
- einer Ausspreitfläche mit 0,5 ml Wasser von mindestens 10 cm$^2$

Der ultradünne Beschichtungslack zeichnet sich weiterhin durch eine sehr gute Kompatibilität zu den Nachweis- und Enzymreaktion aus, das heißt, diese werden durch den Beschichtungslack oder dessen Inhaltsstoffe nicht beeinflusst. Die gute Kompatibilität äußert sich darin, dass durch Verwendung des erfindungsgemäßen Materials zum Beispiel in einem Blutzuckermessstreifen keine Veränderung in dem Messwert des Blutzuckergehaltes der Probe beobachtet wird.

Des Weiteren zeichnet sich der ultradünne Beschichtungslack durch eine sehr gute Alterungsstabilität der Benetzungs- und Ausspreiteigenschaften aus. Die Alterungsstabilität wird mit Hilfe der Ausspreitfläche und insbesondere durch Bestimmung der Transportgeschwindigkeit einer wässrigen Testflüssigkeit im Messkanals eines Teststreifens überprüft. So wird beobachtet, dass die Ausspreitfläche von 0,5 mL Wasser auf dem Beschichtungslack auch nach einer Lagerung von 10 Wochen bei 40 °C oder 10 Wochen bei 70 °C mindestens 85 % und vorzugsweise mindestens 90 % des Ursprungswertes vor der Lagerung beträgt. Unter Spreiten versteht man die Ausbreitung einer Flüssigkeit als einen Transportvorgang auf einer festen Phase (Oberfläche).

Die Transportgeschwindigkeit einer wässrigen Testflüssigkeit zum Beispiel deionisiertes Wasser und 0,1 Gew.-% Methylblau) in einem Messkanal eines Blutzuckerteststreifens wird mittels optischer beziehungsweise elektronischer Zeitmessung ermittelt, wobei der Beschichtungslack eine Wand des Kanals bildet. Die Transportgeschwindigkeit der Testflüssigkeiten beträgt auch nach einer Lagerung von 10 Wochen bei 40 °C oder 10 Wochen bei 70 °C mindestens 20 mm/s und vorzugsweise mindestens 30 mm/s.

Die Transportgeschwindigkeit von Blut als Testflüssigkeit beträgt vorzugsweise mindestens 7 mm/s.

In der Literatur gibt es zahlreiche Untersuchungen zu den Phänomen der Benetzbarkeit und der Verbesserung der Benetzbarkeit durch die Verwendung von Tensiden.

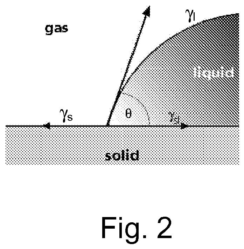

Das Phänomen der Benetzung eines Festkörpers durch eine Flüssigkeit wird durch die Youngsche Gleichung (Gl. 1) beschrieben (siehe hierzu Figur 2)

$$\gamma_l * \cos \theta = \gamma_s - \gamma_{sl} \qquad\qquad \text{Gl. 1}$$

$\theta$  - Kontaktwinkel (Benetzungswinkel, Randwinkel)
$\gamma_l$  - Oberflächenspannung der Flüssigkeit
$\gamma_s$  - Oberflächenspannung des Festkörpers
$\gamma_{sl}$  - Grenzflächenspannung zwischen der Flüssigkeit und dem Festkörper

Wenn der Kontaktwinkel $\theta \gg 90°$ ist, sind Flüssigkeit und Festkörper sehr unverträglich, und es kommt zu keiner Benetzung der Festkörperoberfläche durch die Flüssigkeit. Im Bereich von 90° bis 20° kommt es zu einer Benetzung der Festkörperoberfläche. Bei Kontaktwinkeln $\theta < 20°$ sind die Oberflächenspannungen zwischen Flüssigkeit und Festkörper sehr ähnlich, und es kommt zu einer sehr guten Benetzung der Festkörperoberfläche durch die Flüssigkeit. Bei Kontaktwinkeln $\theta \ll 20°$ ($\theta \sim 0°$) spreitet die Flüssigkeit auf der Festkörperoberfläche aus (siehe "Die Tenside", Kosswig/Stache, Carl Hanser Verlag, 1993, ISBN 3-446-16201-1, Seite 23).

In diesen Untersuchungen wird jeweils das Tensid der Flüssigkeit zugegeben, um eine Verbesserung der Benetzungseigenschaften von wässrigen Lösungen für beliebige Untergründe zu erzielen. Es gibt bisher kaum Untersuchungen, in denen das Tensid direkt auf eine Oberfläche aufgebracht wird, um deren Benetzbarkeit für beliebige wässrige Flüssigkeiten zu erhöhen. In den wenigen Veröffentlichungen hierzu (siehe Stand der Technik) dient die tensidhaltige Beschichtung zur hydrophilen Modifikation der Grenzfläche zwischen Festkörper und Flüssigkeit. Das Tensid wird hierbei einer Polymermatrix zum Beispiel Polyvinylpyrrolidon oder Polyvinylidenchlorid zugegeben.

Überraschenderweise und für den Fachmann nicht vorhersehbar zeigen Beschichtungslacke mit mindestens einem anionischen Tensid auf Basis eines Sulfobernsteinsäureester-Salzes mit einem ultradünnen Beschichtungsauftrag nach deren Trocknung von 5 bis 100 mg/m$^2$ und bevorzugt 10 bis 50 g/m$^2$ sehr gute sowie dauerhafte Ergebnisse bezüglich Benetzbarkeit und Flüssigkeitstransport.

Nichtionische Tenside besitzen eine erhebliche Mobilität auf der Oberfläche. Das führt zur Übertragung des Tensids auf zum Beispiel Umlenkrollen im Verarbeitungsprozess, zum Übertrag, wenn die beschichtete Bahn aufgerollt wird, auf die eigene Rückseite und zu Migrationsvorgängen im Endprodukt. Es folgt eine Reduzierung bis hin zum Verlust der Funktionstüchtigkeit der hydrophilen Beschichtung.

In WO 2005/039770 A1 wird versucht, diesem Effekt durch den Einsatz eines Stabilisators zu begegnen. Die vorliegende Erfindung zeigt jedoch überraschenderweise, dass der Beschichtungslack eines anionischen Tensids auf Basis eines Sulfobernsteinsäureester-Salzes mit Beschichtungsauftrag eine deutlich alterungs- beziehungsweise langzeitstabilere Benetzungseigenschaften in der Applikation, obwohl im Gegenbeispiel G des Patents WO 2005/039770 A1 diese Möglichkeit verneint wird. Entscheidend für die Funktionstüchtigkeit des erfindungsgemäßen Beschichtungslacks ist der ultradünne Beschichtungsauftrag in Kombination mit dem anionischen Tensids auf Basis eines Sulfobernsteinsäureester-Salzes.

Eine typische Anwendung des erfindungsgemäßen Materials ist in medizinischen Diagnosestreifen gegeben. Das erfindungsgemäße bahnförmige Material stellt in den Diagnosestreifen den Transport der biologischen Flüssigkeit, dem so genannten Analyten, sicher. Dieser Transport muss auch nach einem längeren Zeitraum (Lagerzeit des Diagnosestreifens) zuverlässig und mit gleicher Geschwindigkeit erfolgen. Beschichtungslacke auf Basis von nichtionische Tensiden wie Fettalkoholethoxylate oder Silikonalkoholethoxylate zeigen zum Beispiel trotz ihrer besseren Benetzungseigenschaften ein deutlich schlechtere Alterungsbeständigkeit. Diese Beschichtungslacke zeigen bereits nach einer Lagerung von 3 Wochen bei 70 °C eine deutliche Abnahme der Benetzungseigenschaften. Noch dramatischer ist das Verhalten dieser Beschichtungslacke in der Anwendung in einem Diagnosestreifen. Hier sind schon nach wenigen Tagen die Benetzungseigenschaften so stark reduziert, dass der Diagnosestreifen keine Funktionstüchtigkeit mehr aufweist. Es findet kein Transport von Testflüssigkeit in den Messkanal mehr statt. Bei diesem Phänomen handelt es vermutlich um ein Migrationsphänomenen beziehungsweise eine Inkompatibilität zwischen dem Tensid und der Klebemasse des Stanzlings.

Für das erfindungsgemäße bahnförmige Material mit sehr guten Benetzungs- und Ausspreiteigenschaften eignen sich Beschichtungslacke aus mindestens einem anionischen Tensid auf Basis eines Sulfobernsteinsäureester-Salzes, vorzugsweise einem Beschichtungslack ausschließlich bestehend aus einem Sulfobernsteinsäureester-Salzes.

Der ultradünne Beschichtungslack zeichnet sich durch einen Kontaktwinkel mit Wasser von kleiner 30°, durch eine Oberflächenspannung von mindestens 65 mN/m, vorzugsweise von mindestens 70 mN/m, wobei die Ausspreitfläche der 0,5 mL Wasser mindestens 10 cm$^2$ beträgt, eine Transportgeschwindigkeit einer wässrigen Testflüssigkeit von mindestens 20 mm/s und vorzugsweise mindestens 30 mm/s sowie durch eine gute Verklebungsfestigkeit für Klebebänder aus.

Die sehr guten Benetzungseigenschaften ändern sich auch nach Lagerungen bei 25 °C über einen Zeitraum von zwei Jahren nicht oder nur geringfügig. Zur Beurteilung der Lagerstabilität der erfindungsgemäßen Beschichtungslacke wird eine Schnellalterung bei erhöhten Temperaturen durchgeführt. Zur Beurteilung der Benetzungseigenschaften werden hauptsächlich der Ausspreittest (Ausspreitfläche) und der Kanaltest herangezogen.

Der Beschichtungslack kann ein oder mehrere Alterungsschutzmittel zur Verbesserung der Langzeitstabilität enthalten, vorzugsweise genau ein Alterungsschutzmittel beziehungsweise Stabilisator. Die Verwendung von Stabilisatoren wie Alterungsschutzmitteln ist in der Kunststoffindustrie bekannt. So werden bei der Herstellung von Materialien oder Werkstoffe aus PVC oder Polyolefinen Alterungsschutzmittel benötigt, um diese Kunststoffe vor thermischer oder oxidativer Schädigung im Herstellprozess zu schützen. Hierbei werden zum Teil Alterungsschutzpaketen bestehend aus primären und sekundären Alterungsschutzmitteln verwendet ("Plastics Additives Handbook", Kapitel "Antioxidants", Carl Hanser Verlag, 5. Auflage).

Vollfläche Beschichtungen mit den üblichen Beschichtungsverfahren haben typischerweise eine Beschichtungsstärke von < 0,3 μm, was in etwa einem Beschichtungsauftrag von < 0,3 g/m$^2$ entspricht. Als Beispiele für typische Beschichtungen in diesem Bereich seien Primer-, Release Lack-Beschichtungen und Bedruckungen mit Farbe genannt. Im Falle der vorliegenden Erfindung kann ein entsprechend hoher Beschichtungsauftrag nicht verwendet werden. Bei einem Beschichtungsauftrag von größer als 100 mg/m$^2$ kommt es zu einer wachsigen oder seifigen Oberfläche, auf welcher eine Verklebung von selbstklebenden Stanzteilen nicht mehr zuverlässig möglich ist. Das kann wiederum zur Delamination der Biosensoren und Diagnosestreifen im Produktionsprozess und bei der Anwendung führen. Des Weiteren kommt es bei entsprechend hohem Beschichtungsauftrag zu einer Verfälschung des Ergebnisses der elektrochemischen Nachweisreaktion. Das anionische Tensid löst sich größtenteils in der Testflüssigkeit. Dadurch ändert sich dessen Leitfähigkeitswert erheblich. Dies führt zu einer Beeinflussung des Messsignals.

Eine Reduzierung des Beschichtungsauftrages führt zu der Gefahr einer nicht gleichmäßigen fehlstellenhaltigen Beschichtung, die die Funktionstüchtigkeit nicht sicherstellt.

Besonders vorteilhaft lässt sich das bahnförmige Material insbesondere zur Verwendung in einem Diagnosestreifen herstellen, indem eine Beschichtungslösung aus einem Lösungsmittel, in dem mindestens ein anionisches Tensid auf Basis eines Sulfobernsteinsäureester-Salzes gelöst ist, wobei der Feststoffgehalt in der Beschichtungslösung bei kleiner 2 Gew.-%, vorzugsweise kleiner als 1 Gew.-% liegt, auf ein Trägermaterial aufgebracht wird, und das Trägermaterial mit der Beschichtungslösung getrocknet wird, so dass sich nach der Trocknung ein Beschichtungsauftrag in Form eines ultradünnen Beschichtungslacks von 5 bis 100 mg/m$^2$ ergibt.

Weiter vorzugsweise wird das Trägermaterial beidseitig mit einer Beschichtungslösung beschichtet und anschließend getrocknet.

Für ultradünne Beschichtungen im Nanometerbereich sind sehr aufwendige Methoden wie Plasmabedampfungen im Hochvakuum bekannt. Diese Verfahren lassen nur sehr eingeschränkt eine Auswahl der zu beschichtenden Materialien zu.

Für den Fachmann überraschend und nicht vorhersehbar führt eine Beschichtung, ausgehend von einer Beschichtungslösung mit einem Feststoffgehalt von kleiner als 2 Gew.-% und bevorzugt kleiner als 1 Gew.-%, mit einem üblichen Beschichtungsverfahren und anschließender Trocknung zu einem gleichmäßige n Beschichtungslack mit einem Beschichtungsauftrag von 5 bis 100 mg/m$^2$.

Besonders überraschend ist, dass trotz dieser ultradünnen Beschichtungsauftrags die Benetzungseigenschaften und somit die Funktiontüchtigkeit des Beschichtungslacks über die gesamte Beschichtungsfläche gegeben ist.

Als Lösemittel für die Beschichtungslösung werden Wasser, Alkohole, vorzugsweise Ethanol oder höhersiedende Alkohole wie n-Butanol oder Ethoxyethanol, Ketone wie Butanon, Ester wie Essigsäureethylester, Alkane wie Hexan, Toluol oder Gemische aus den vorher genannten Lösemitteln eingesetzt. Für die Beschichtung der Beschichtungslösung können die üblichen Beschichtungsverfahren verwendet werden. Beispielsweise seien Spray-Coating, Rasterwalzenauftrag, Mayer-Bar-Beschichtung, Mehrwalzenauftragsbeschichtung, Druckverfahren und Kondensationsbeschichtung genannt ("Modern Coating and Drying Techn.", Cohne, 1992, Wiley-VCH, ISBN 0-471-18806-9, Kapitel 1 und 3).

Der ultradünne Beschichtungslack kann einseitig oder beidseitig auf das Trägermaterial vorzugsweise vollflächig aufgebracht sein.

Als Basis für das erfindungsgemäße Trägermaterial werden die dem Fachmann geläufigen und üblichen Trägermaterialien wie Folien aus Polyethylen, Polypropylen, verstrecktes Polypropylen, Polyvinylchlorid, Polyester und besonders bevorzugt Polyethylenterephthalat (PET) verwendet. Hierbei kann es sich um Monofolien, coextrudierte oder laminierte Folien handeln. Diese Aufzählung ist beispielhaft und nicht abschließend. Die Oberfläche der Folien kann durch geeignete Verfahren wie zum Beispiel Prägen, Ätzen oder Lasern mikrostrukturiert sein. Die Verwendung von Laminaten, Vliesen, Geweben oder Membranen ist ebenfalls möglich. Die Trägermaterialien können zur besseren Verankerung des Beschichtungslacks nach den Standardverfahren chemisch oder physikalisch vorbehandelt sein, beispielhaft seien die Corona- oder die Flammenbehandlung genannt. Zur Haftvermittlung ist ebenfalls eine Primerung des Trägermaterials mit zum Beispiel PVC, PVDC, thermoplastischen Polyestercopolymeren möglich.

Die Dicke der erfindungsgemäßen Folie beträgt 12 bis 350 $\mu$m und vorzugsweise 50 bis 150 $\mu$m.

Das erfindungsgemäße Material findet aufgrund der geschilderten Eigenschaften unter anderem Anwendung im Aufbau von medizinischen Diagnosestreifen zur Untersuchung von biologischen Flüssigkeiten, auch Biosensoren genannt. Weitere Anwendungen für das erfindungsgemäße Material sind so genannte Point-of-Care-Devices beziehungsweise Microfluidic Device, darunter versteht man medizinische Geräte, Testplatten oder Teststreifen, in den sich Mikrostrukturen oder Mikrokanäle befinden. Mittels dieser Microfluidic Device können ebenfalls biologische Flüssigkeiten untersucht werden. Beispielhaft seien Teststreifen zur Bestimmung des Koagulationsverhaltens von Blut erwähnt.

Ein beispielhafter Aufbau eines medizinischen Diagnoseteststreifens mit dem erfindungsgemäßen Material ist in den Figuren 1a und 1b schematisch dargestellt.

Der Teststreifen 1 setzt sich aus den Schichten 2, 3, 4 und 5 zusammen.

Auf das Basismaterial 3 sind die elektrischen Leiterbahnen und das immobilisierte Enzym aufgedruckt. Diese bedruckte Basisschicht ist zum Beispiel ein Stanzling eines doppelseitigen Haftklebebands 2. Das Haftklebeband 2 selbst weist zwei Haftklebeschichten aus vorzugsweise einer Polyacrylat-Haftklebemasse auf, zwischen denen ein Träger aus PET vorhanden ist. Der Stanzling des Haftklebebands 2 bildet einen Messkanal 6, der zum Transport der zu vermessenden biologischen Flüssigkeit zum Beispiel Blut zur Messzelle notwendig ist. Auf das Haftklebeband 2 ist eine Material 5 mit dem hydrophilen Beschichtungslack 4 so laminiert, dass dieser hydrophile Beschichtungslack zum Inneren des Messkanals zeigt und somit eine dessen Wandung bildet.

**Prüfmethoden**

**Oberflächenspannung und Kontaktwinkelmessung**

Die Messung des Kontaktwinkels mit Wasser und der Oberflächenspannung auf festen Oberflächen erfolgt nach EN 828:1997 mit einem Gerät G2/G402 der Firma Krüss GmbH. Die Oberflächenspannung wird mit der Methode nach Owens-Wendt-Rabel&Kaeble nach Messung des Kontaktwinkels mit deionisiertem Wasser und Diiodmethan bestimmt. Die Werte ergeben sich jeweils aus der Mittlung von vier Messwerten.

**Kanaltest**

Die Messung der Transportgeschwindigkeit einer wässrigen Testflüssigkeit erfolgt in einem Kapillartest. Hierzu wird auf eine mit Leiterbahnen bedruckte Oberfläche einer 500 μm dicken PET-Folie (von der Firma Abbott Diagnostic Care Inc.) ein Stanzling eines doppelseitigen Klebebands mit der Dicke von 75 μm (tesa® 62550, ein doppelseitig klebendes Haftklebeband bestehend aus einer beidseitig mit einer Acrylatklebemasse beschichteten 50 μm PET-Trägerfolie, Produktdicke 75 μm) laminiert. Der Stanzling bildet einen Messkanal mit einer Breite von 1 mm und ist nach beiden Seiten offen. Dieser Messkanal wird anschließend mit der zu prüfenden Folie bedeckt, so dass die zu prüfende Oberfläche eine Wand des Kanals bildet. Der Kanal beziehungsweise die Kapillare hat die Abmaße Höhe 75 μm und Breite 1 mm.

Ein Tropfen der Testflüssigkeit, bestehend aus deionisiertem Wasser und 0,1 Gew.-% Methylblau, wird nun an die Öffnung des Messkanals gehalten und die Zeit der Flüssigkeitsfront für das Zurücklegen eines Messweges von 2,3 mm (Abstand der Messmarkierungen) ermittelt. Die Zeit wird entweder elektrisch oder mittels einer Videokamera ermittelt. Aus der gemessenen Zeit wird die Fließ- beziehungsweise Transportgeschwindigkeit berechnet.

Als Testflüssigkeit werden ebenfalls biologische Flüssigkeiten wie Blut verwendet. Allerdings sind biologische Flüssigkeiten wie Blut sind als Testflüssigkeit weniger gut geeignet, da diese Eigenschaftsschwankungen unterliegen. So schwankt zum Beispiel die Viskosität von Blut sehr stark. Die Viskosität von Blut ist abhängig vom Hämatokrit-Wert.

**Ausspreitfläche und Ausspreitgeschwindigkeit**

Zur Messung der Ausspreitfläche werden 0,5 mL deionisiertes Wasser, das mit 0,1 Gew.-% des Farbstoffes Methylblau versetzt ist, mittels einer geeichten Pipette der Firma Eppendorf auf die zu testende Oberfläche gleichmäßig aufgegeben. Mittels Millimeterpapier, das sich unter dem Prüfling befindet, wird nach etwa 15 s der Durchmesser der benetzten Fläche bestimmt und daraus die Benetzungsfläche errechnet.

Zur Bestimmung der Ausspreitgeschwindigkeit wird diese Messung per Video-Kamera aufgenommen und die Geschwindigkeit anhand der Benetzungsfläche nach 5 s berechnet.

Die Messung erfolgt unter standardisierten klimatischen Bedingungen von bei 23 °C und 50% r.L.

**Verklebungsfestigkeit**

Zur Ermittlung der Verklebungsfestigkeit zwischen der zu testenden Folie und eines Standardhaftklebebandes mit sehr scherfester Haftklebemasse wird das Klebeband tesa® 4872, ein doppelseitig klebendes Haftklebeband bestehend aus einer beidseitig mit einer Acrylatklebemasse beschichteten 12 μm PET -Trägerfolie, Produktdicke 48 μm, Klebkraft auf Stahl 4,0 N/25 mm, mittels einer 2 kg Rolle durch zehnmaliges Anrollen auf die zu testende Oberfläche laminiert. Anschließend wird sofort die Kraft gemessen, die nötig ist, um den Verbund zwischen der zu testenden Oberfläche und des Haftklebebandes zu lösen. Dazu wird er Verbund in einer Zugprüfmaschine im Winkel von 180° auseinander gezogen.

**Beschichtungsauftrag**

Zur Bestimmung des Beschichtungsauftrages werden 50 cm$^2$ der beschichteten Folie mit 50 ml eines Methanol/Wasser-Gemisches (50:50, v:v) abgespült. Das Extrakt wird per HPLC (Gerät Algient 1100 series, Agilent Technologies Inc., Säule Phenomenex RP, UV-Dedektor) getrennt. Als Eluent wird ein Wasser/Methanol-Gemisch verwendet. Die Konzentration und somit der Beschichtungsauftrag wird über die Integration der Peakfläche anhand einer Kalibriergeraden berechnet.

**Lagerung zur Ermittlung der Alterungsstabilität**

Zur Beurteilung der Lagerungsstabilität werden A4-Muster in einem Trockenschrank bei 40 °C für 10 Wochen oder bei 70 °C für 10 Wochen gelagert. Bei der Lagerung ist sicherzustellen, dass die beschichtete Oberfläche nicht abgedeckt wird. Des Weiteren werden Blutzucker-Teststreifen (siehe Kanaltest) ebenfalls für 40 °C für 10 Wochen oder bei 70 °C für 10 Wochen im Trockenschrank gelagert.

Im Folgenden soll die Erfindung anhand mehrerer Beispiele näher erläutert werden, ohne damit die Erfindung unnötig einschränken zu wollen.

**Beispiele**

**Beispiel 1**

Die PET-Folie Hostaphan® RN 100 von Mitsubishi Polyesterfilm GmbH mit einer Dicke von 100 $\mu$m wird einseitig coronavorbehandelt und anschließend mit einer Lösung bestehend aus 0,5 Gew. -% Rewopol® SB DO 75 von Goldschmidt GmbH in Ethanol mittels Rasterwalze in einer Breite von 2000 mm und mit einer Geschwindigkeit von 200 m/min beschichtet. Die Trocknung des Beschichtungslacks erfolgt in einem Trockenkanal bei 120 °C.

Der Beschichtungslack zeigt sehr gute Benetzungseigenschaften. Die Geschwindigkeit des Flüssigkeitstransports im Messkanal nimmt auch nach eine Lagerzeit von 10 Wochen bei 70 °C nicht ab.

**Beispiel 2**

Die PET-Folie Hostaphan® RN 100 von Mitsubishi Polyesterfilm GmbH mit einer Dicke von 100 $\mu$m wird einseitig coronavorbehandelt und anschließend mit einer Lösung bestehend aus 0,7 Gew.-% Lutensit® A-BO und 0,05 Gew.-% Irganox® 1010 von Ciba Inc. in Ethanol mittels Drahtrakel in einer Breite von 500 mm und einer Geschwindigkeit von 20 m/min beschichtet. Die Trocknung des Beschichtungslacks erfolg t in einem Trockenkanal bei 110 °C.

Der Beschichtungslack zeigt ein sehr gutes Benetzungsverhalten für Wasser und wässrige biologische Flüssigkeiten wie Blut. Der Beschichtungslack zeigt ein gutes Benetzungsverhalten auch nach einer Lagerungszeit von 10 Wochen bei bis zu 70 °C.

Übersicht über die Ergebnisse der Beispiele

| | Einheit | Beispiel 1 | Beispiel 2 |
|---|---|---|---|
| Eigenschaften des bahnförmigen Materials | | | |
| Beschichtungsauftrag | mg/m$^2$ | 21 | 29 |
| Verankerungstest | N/cm | 2,1 | 1,9 |
| Oberflächenspannung | mN/m | 67 | 69 |
| Oberflächenspannung nach 6 Wochen bei 70 °C | mN/m | 66 | 68 |
| Kontakt-Winkel | ° | 23 | 25 |
| Kontakt-Winkel nach 10 Wochen bei 70 °C | ° | 26 | 27 |
| Ausspreitfläche von 0,5 mL Wasser | cm$^2$ | 10 | 11 |
| Ausspreitfläche von 0,5 mL Wasser nach 10 Wochen bei 40 °C | cm$^2$ | 12 | 13 |
| Ausspreitfläche von 0,5 mL Wasser nach 10 Wochen bei 70 °C | cm$^2$ | 11 | 12 |
| Kanaltest | mm/s | 41 | 40 |
| Kanaltest nach 10 Wochen bei 70°C | mm/s | 33 | 38 |

**Gegenbeispiele**

**Gegenbeispiel 1**

Als Gegenbeispiel 1 wird die kommerzielle PET-Folie Hostaphan RN 100 von Mitsubishi Polyesterfilm GmbH verwendet, deren Oberfläche nicht modifiziert beziehungsweise beschichtet ist.

Bei dieser Folie wird eine niedrige Oberflächenspannung gemessen. Dadurch spreiten wässrige Flüssigkeiten nicht auf dieser Oberfläche aus. Biologische Flüssigkeiten werden dadurch auch nicht in den Kanal im Kanaltest transportiert.

**Gegenbeispiel 2**

Als Gegenbeispiel 2 wird eine Beschichtung analog Beispiel 1 hergestellt. Abweichend wird hier jedoch eine Beschichtungslösung aus 5 Gew.-% Rewopol® SB DO 75 von Goldschmidt GmbH in Ethanol verwendet.

Diese Beschichtung zeigt sehr gute Benetzungseigenschaften. Die Oberfläche ist jedoch sehr wachsartig bzw. seifig. Eine Verankerung von Klebebändern ist kaum möglich. Das spiegelt sich in den sehr geringen Verankerungskräften wieder. Bei dem Kanaltest gebt es Unterläufer zwischen hydrophiler Beschichtung und dem Klebeband. Eine Messung ist somit nicht möglich. Eine Verwendung dieser Folie ist nicht möglich.

**Gegenbeispiel 3**

Als Gegenbeispiel 3 wird die kommerzielle hydrophile Folie ARflow 90128 von Adhesives Research verwendet. Dieses Produkt besteht aus einer PET-Folie, die einseitig mit einem tensidhaltigen Schmelzkleber beschichtet ist. Dieser Beschichtungslack ist mit einer Schutzfolie abgedeckt.

Diese hydrophile Folie zeigt mäßige bis gute Eigenschaften bezüglich des Ausspreitens von biologischen Flüssigkeiten. Nach Lagerung wird ein Rückgang der Benetzbarkeit der Folie beobachtet. Nachteilig ist ebenfalls die wachsartige Oberfläche aufgrund der hohen Tensidkonzentration. Das führt bei der Anwendung in Mehrschichtaufbauten, bei denen Haftklebebänder auf dieser hydrophilen Folie verklebt werden, zu einer geringen Verklebungsfestigkeit und dadurch zu einem Delaminieren dieser Verklebung. Nach Lagerung über 10 Wochen bei 70 °C wird eine Abnahme der Benetzungseigenschaften beobachtet.

**Gegenbeispiel 4**

Als Gegenbeispiel 4 wird das kommerzielle Produkt 9971 von 3M Inc. verwendet. Diese PET-Folie besitzt einseitig einen oberflächenaktive n Beschichtungslack. Diese besteht aus einer tensidhaltigen PVDC-Beschichtung.

Diese hydrophile Folie zeigt mäßige Spreiteigenschaften für biologische Flüssigkeiten. Hierbei sind die hydrophilen Oberflächeneigenschaften über die Fläche sowie von Charge zu Charge sehr inhomogen.

**Gegenbeispiel 5**

Als Gegenbeispiel 5 wird das Beispiel 1 aus US 2005/0084681 A1 nachgestellt. Dazu wird im Labor eine 100 $\mu$m PET-Folie mit 0,6 Gew.-% Dynoll® 604 von Air Producte Inc. und 0,2 Gew.-% Rhodacal® DS10 Rhodia in einem Isopropanol-Wasser-Gemisch (70/30) mittels eines Drahtrakels (Nr. 1) beschichtet und anschließend 3 min bei 100 °C getrocknet.

Dieser Beschichtungslack zeigt gute Benetzungseigenschaften, welche auch nach Lagerung stabil sind.

Übersicht über die Ergebnisse der Gegenbeispiele

| | Einheit | Gegen - beispiel 1 | Gegen - beispiel 2 | Gegen - beispiel 3 | Gegen - beispiel 4 | Gegen - beispiel 5 |
|---|---|---|---|---|---|---|
| Oberflächenmodifizierung | | -- | Tensid | TPET + Tensid | PVDC + Tensid | Tensid + Stabilisator |
| Eigenschaften des bahnförmigen Materials | | | | | | |
| Beschichtungsauftrag | mg/m$^2$ | | 235 | > 1000* | > 1000* | nicht bekannt* |
| Verankerungstest | N/cm | 4,8 | 0,2 | 1,3 | 5,1 | 3,8 |
| Oberflächenspannung | mN/m | 46 | 71 | 63 | 61-63** | 64 |
| Oberflächenspannung nach 6 Wochen bei 70 °C | mN/m | -- | 70 | 57 | 58-60** | 64 |
| Kontakt-Winkel | ° | 63 | 8 | 22 | 23-27** | 21 |
| Kontakt-Winkel nach 6 Wochen bei 70 °C | ° | -- | 11 | 24 | 26-30** | 18 |

(fortgesetzt)

| Eigenschaften des bahnförmigen Materials | | | | | | |
|---|---|---|---|---|---|---|
| Ausspreitfläche von 0,5 mL Wasser | cm$^2$ | 2,5 kein Ausspreiten | 17 | 9 | -7* | 10 |
| Ausspreitfläche von 0,5 mL Wasser nach 10 Wochen bei 40 °C | cm$^2$ | -- | 17 | 9 | ~6* | 11 |
| Ausspreitfläche von 0,5 mL Wasser nach 6 Wochen bei 70 °C | cm$^2$ | -- | 16 | 7 | ~5* | 9 |
| Kanaltest | mm/s | Flüssigkeit wandert nicht in die Kapillare | Unterläufer | 29 | 15 | 41 |
| Kanaltest nach 6 Wochen bei 70°C | mm/s | Flüssigkeit wandert nicht in die Kapillare | Unterläufer | 8 | 0,6 | Flüssigkeit wandert nicht in die Kapillare |
| * eine exakte Messung ist mit der angegebenen Messmethode nicht möglich<br>**Eigenschaften des Beschichtungslacks ist über die Fläche nicht homogen | | | | | | |

**Patentansprüche**

1. Bahnförmiges Material insbesondere zur Verwendung in einem Diagnosestreifen bestehend aus einem Trägermaterial, das ein- oder beidseitig mit einem ultradünnen Beschichtungslack, bestehend aus einem Sulfobernsteinsäureester-Salz, beschichtet ist, wobei der ultradünne Beschichtungslack nach der Trocknung einen Beschichtungsauftrag von 5 bis 100 mg/m2 aufweist.

2. Bahnförmiges Material nach Anspruch 1, **dadurch gekennzeichnet, dass** das Beschichtungsauftrag des Beschichtungslacks 10-50 mg/m2, vorzugsweise 15-30 mg/m2 beträgt.

3. Bahnförmiges Material nach zumindest einem der vorherigen Ansprüche, **dadurch gekennzeichnet, dass** der Beschichtungslack aus Natrium-sulfobernsteinsäure-bis-2-ethylhexylester besteht.

4. Bahnförmiges Material nach zumindest einem der vorherigen Ansprüche, **dadurch gekennzeichnet, dass** das Trägermaterial aus einer Polyesterfolie mit einer bevorzugten Dicke von 12 bis 350 $\mu$m und weiter vorzugsweise 50 bis 150 $\mu$m besteht.

5. Verwendung eines Materials nach zumindest einem der vorherigen Ansprüche in medizinischen Anwendungen, vorzugsweise in Diagnosestreifen, Biosensoren, Point-of-Care-Devices oder Microfluidic Device, mittels derer biologische Flüssigkeiten untersucht werden.

**Claims**

1. Material in web form intended in particular for use in a diagnostic strip and composed of a carrier material coated on one or both sides with an ultrathin coating varnish composed of a sulphosuccinic ester salt, the ultrathin coating varnish having, after drying, a coating application of 5 to 100 mg/m$^2$.

2. Web material according to Claim 1, **characterized in that** the coating application of the coating varnish is 10-50 mg/m$^2$, preferably 15-30 mg/m$^2$.

3. Web material according to at least one of the preceding claims, **characterized in that** the coating varnish is composed of sodium bis-2-ethylhexyl sulphosuccinate.

**4.** Web material according to at least one of the preceding claims, **characterized in that**
the carrier material is composed of a polyester film having a preferred thickness of 12 to 350 $\mu$m and more preferably 50 to 150 $\mu$m.

**5.** Use of a material according to at least one of the preceding claims in medical applications, preferably in diagnostic strips, biosensors, point-of-care devices or microfluidic devices used to analyse biological fluids.


**Revendications**

**1.** Matériau en forme de bande en particulier pour une utilisation dans une bande de diagnostic constituée d'un matériau de support, qui est revêtu d'un côté ou des deux côtés avec un vernis de revêtement ultra-mince, constitué d'un sel d'ester d'acide sulfosuccinique, le vernis de revêtement ultra-mince présentant après le séchage une distribution de revêtement de 5 à 100 mg/m$^2$.

**2.** Matériau en forme de bande selon la revendication 1, **caractérisé en ce que** la distribution de revêtement du vernis de revêtement est de 10 à 50 mg/m$^2$, préférablement de 15 à 30 mg/m$^2$.

**3.** Matériau en forme de bande selon au moins l'une des revendications précédentes, **caractérisé en ce que** le vernis de revêtement est constitué de sulfosuccinate de bis-2-éthylhexyle sodique.

**4.** Matériau en forme de bande selon au moins l'une des revendications précédentes, **caractérisé en ce que** le matériau de support est constitué d'une feuille de polyester dotée d'une épaisseur préférée de 12 à 350 $\mu$m et encore plus préférée de 50 à 150 $\mu$m.

**5.** Utilisation d'un matériau selon au moins l'une des revendications précédentes dans des applications médicales, de préférence dans des bandes de diagnostic, des biocapteurs, des dispositifs de lieu de soin ou un dispositif microfluidique, au moyen desquels des liquides biologiques sont examinés.

Fig. 1a

Fig. 1b

## Fig. 2

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- US 5304468 A
- EP 1225448 A1
- WO 03082091 A1
- GB 1073596 A
- EP 0451981 A1
- WO 9303673 A1
- US 6555061 B
- WO 03067252 A1
- US 20020102739 A1
- WO 03008933 A2
- WO 0167099 A1
- WO 2005111606 A1

- DE 10234564 A1
- US 5759364 A1
- DE 3021166 A1
- DE 19849008 A1
- EP 1358896 A1
- DE 19815684 A1
- US 20050084681 A1
- EP 1647568 A1
- US 20020110486 A1
- EP 1394535 A1
- US 5997817 A1
- WO 2005039770 A1

**In der Beschreibung aufgeführte Nicht-Patentliteratur**

- **F. GARBASSI et al.** Polymer Surface. John Wiley Verlag, 1998, 235, , 256
- Ullmann's Encyclopedia of Industrial Chemistry. 1994, vol. A25, 747
- Die Tenside. Kosswig/Stache. Carl Hanser Verlag, 1993, 23

- Antioxidants. Plastics Additives Handbook. Carl Hanser Verlag
- **COHNE.** Modern Coating and Drying Techn. Wiley-VCH, 1992